# EUROPÄISCHE PATENTSCHRIFT

(11) **EP 2 821 182 B1**
(45) Veröffentlichungstag und Bekanntmachung des Hinweises auf die Patenterteilung: **06.09.2017**
(21) Anmeldenummer: 14169565.0
(22) Anmeldetag: 23.05.2014
(51) Int. Cl.: B25B 29/02

(54) **Spannvorrichtung zum Dehnen eines Gewindebolzens**
Clamping device for stretching a threaded bolt
Dispositif de serrage pour l'étirement d'un boulon fileté

(30) Priorität: 05.07.2013 DE 102013107096
(43) Veröffentlichungstag der Anmeldung: 07.01.2015
(73) Patentinhaber: ITH GmbH & Co. Kg, 59872 Meschede (DE)
(72) Erfinder:
(74) Vertreter: Bungartz Christophersen Partnerschaft mbB Patentanwälte

(56) Entgegenhaltungen:
- DE-C2- 19 810 039
- FR-A1- 2 871 231
- US-A- 2 885 919
- US-A- 3 015 975

## Beschreibung

Die Erfindung betrifft eine Spannvorrichtung gemäß dem Oberbegriff des Anspruchs 1 zum Dehnen eines Gewindebolzens durch Zug an dessen Gewindeendabschnitt, mit einem den Gewindeendabschnitt und eine auf den Gewindeendabschnitt aufgeschraubte Mutter umgebenden Stützrohr, einem in Verlängerung des Stützrohrs angeordneten Zylinder mit mindestens einem darin in Längsrichtung bewegbaren, mit einer Hydraulikversorgung verbindbaren Kolben, einer mit dem Gewindeendabschnitt verschraubbaren, durch den Kolben axial mitnehmbar ausgebildeten Wechselbuchse, und einer Getriebeanordnung zum Nachstellen der Mutter, wobei Bestandteile der Getriebeanordnung ein außen an der Mutter angreifendes Mitnehmerelement und eine Antriebswelle sind, deren Drehachse in einem Winkel von mehr als 0° und weniger als 180°, vorzugsweise in einem Winkel von 90°, zur Längsmittelachse des Kolbens angeordnet ist.

Derartige Bolzenspannvorrichtungen, wie sie z. B. aus der EP 1 784 283 B1 und der WO 99/46089 bekannt sind, dienen dem Anziehen und gegebenenfalls auch dem Lösen hoch belasteter Schraubverbindungen aus einem Gewindebolzen und einer Mutter. Die Spannvorrichtung hat die Aufgabe, mittels eines hydraulisch betätigten Kolbens in Bolzenlängsrichtung für eine gewisse Zeit eine vorgegebene Vorspannkraft auf den Gewindebolzen aufzubringen, um so die Möglichkeit zu schaffen, die darauf aufgeschraubte Mutter momentenfrei anzuziehen bzw. nachzuziehen, oder auch zu lösen. Zum Drehen der Mutter ist seitlich am Gehäuse der Spannvorrichtung ein Getriebe mit einer Eingriffsstruktur für ein externes Antriebswerkzeug angeordnet. Nach dem Ansetzen des externen Antriebswerkzeuges wird dieses um eine Drehachse gedreht, die parallel zur Längsmittelachse des Kolbens angeordnet ist. In der Praxis kommt es, insbesondere im Fall dicht nebeneinander angeordneter Gewindebolzen, oft zu Situationen, in denen der vorhandene Platz nicht für die Spannvorrichtung einschließlich des seitlich daran befestigten Getriebes ausreicht, oder die Eingriffsstruktur des Getriebes so unglücklich liegt, dass dort kein geeignetes Antriebswerkzeug ansetzbar ist, oder nur mit Mühe.

Zu ähnlichen Situationen kann es bei Spannvorrichtungen zum Dehnen von Gewindebolzen mittels hydraulisch betätigter Kolben kommen, wie sie aus der US 2,885,919 oder der US 3,015,975 bekannt sind. Das Nachziehen der Mutter erfolgt hier jeweils über ein Handrad, welches außen an der Bolzenspannvorrichtung angeordnet ist und über eine Kegelradverzahnung mit einem die Mutter umschließenden Mitnehmerelement gekoppelt ist. Die Drehachse des Handrades ist in einem Winkel von 90° zu der Längsmittelachse des hydraulischen Kolbens angeordnet und schneidet diese Längsmittelachse. Die auf die Mutter übertragbare Kraft ist durch die manuelle Erreichbarkeit und Griffigkeit des Handrades begrenzt, was im Falle hoher Reibungskräfte zwischen der Mutter und dem Gewinde des Gewindebolzenz von Nachteil sein kann.

Die Aufgabe der Erfindung ist es daher, eine Spannvorrichtung zu schaffen, die ein Arbeiten auch in solchen räumlich beengten Situationen erlaubt, in denen herkömmliche Spannvorrichtungen nicht einsetzbar sind.

Zur Lösung dieser Aufgabe wird eine Spannvorrichtung zum Dehnen eines Gewindebolzens mit den Merkmalen des Patentanspruchs 1 vorgeschlagen.

Bei dieser Spannvorrichtung ist die Antriebswelle mit einer Eingriffsstruktur für ein Antriebswerkzeug versehen. Außerdem verläuft die Drehachse tangential und in einem Abstand zur Längsmittelachse des Kolbens. Eine derartige Anordnung bietet den Vorteil, die Spannvorrichtung auch in Montagesituationen verwenden zu können, in denen eine Anordnung, bei der die Drehachse der Antriebswelle die Längsmittelachse des Kolbens schneidet, nicht möglich ist, oder nur mit Nachteilen verbunden möglich ist.

Da die Drehachse der Antriebswelle der Getriebeanordnung nicht parallel, sondern in einem Winkel zur Längsmittelachse des Kolbens angeordnet ist, kann die Mutter der Schraubverbindung über die schräg bzw. quer angeordnete Antriebswelle z. B. von einer weiter entfernten Position aus eingestellt werden. Unter Verwendung des externen Antriebswerkzeuges, z. B. eines Sechskantschlüssels, lässt sich daher die Mutter in bestimmten Montagesituationen von einer günstigeren, nämlich weniger beengten, besser zugänglichen oder schlicht bequemeren Position aus anziehen bzw. nachziehen.

Vorzugsweise ist die Antriebswelle an ihrem der Eingriffsstruktur abgewandten Ende als ein erstes Verzahnungselement, und das Mitnehmerelement an seinem Umfang mit einem zweiten Verzahnungselement versehen, wobei das erste und das zweite Verzahnungselement in Wirkverbindung zueinander stehen. Dabei bedeutet "Wirkverbindung", dass die Verzahnungselemente entweder in unmittelbarem Eingriff miteinander stehen, oder die Wirkverbindung über weitere, zwischengeschaltete Elemente realisiert ist.

Vorzugsweise ist das erste Verzahnungselement als Antriebskegelrad ausgebildet. Ein Kegelrad ermöglicht es auf eine einfache und zuverlässige Weise, dass die Drehachsen zweier unmittelbar miteinander in Eingriff stehender Verzahnungselemente zueinander im Winkel angeordnet, d. h. nicht parallel sind.

Von Vorteil kann ferner sein, wenn weiterer Bestandteil der Getriebeanordnung ein zwischen dem ersten Verzahnungselement und dem zweiten Verzahnungselement angeordnetes drittes Verzahnungselement ist, das mit diesen beiden in Wirkverbindung steht und so zur

Übertragung der Drehung der mit der Antriebsstruktur versehenen Antriebswelle auf das Mitnehmerelement angeordnet ist.

Dabei wird vorgeschlagen, dass das dritte Verzahnungselement als ein mit dem Antriebskegelrad in Eingriff stehendes weiteres Kegelrad ausgebildet ist. Durch die sich somit ergebende Kegelradpaarung aus dem ersten und dem dritten Verzahnungselement wird eine konstruktiv einfache Drehachsenumlenkung erzielt.

Zur Übertragung der Drehung der Antriebswelle auf das Mitnehmerelement ist gemäß einer weiteren Ausgestaltung zwischen dem weiteren Kegelrad und dem zweiten Verzahnungselement ein viertes mit diesen in Wirkverbindung stehendes und als weiteres Zylinderrad ausgebildetes Verzahnungselement angeordnet. Dieses zusätzliche Verzahnungselement kann so klein ausgebildet sein, dass es durch eine dafür vorgesehene seitliche Durchtrittsöffnung in dem Stützrohr hindurch mit dem zweiten Verzahnungselement in Eingriff steht.

Ferner wird vorgeschlagen, dass das Mitnehmerelement mit einem Innenmehrkant zum Aufstülpen auf die Mutter versehen ist.

Ferner wird vorgeschlagen, dass die Getriebeanordnung um die Drehachse des Mitnehmerelements herum verschwenkbar ausgestaltet ist und/oder dass die Getriebeanordnung um die Drehachse des vierten Verzahnungselements herum verschwenkbar ausgestaltet ist. Beide Maßnahmen ermöglichen einzeln oder zusammen eine individuelle Anpassung der Spannvorrichtung an spezielle Montagesituationen.

Gemäß einer weiteren Ausgestaltung ist weiterer Bestandteil der Getriebeanordnung ein um die Antriebswelle angeordnetes ein- oder mehrteilig ausgebildetes Getriebegehäuse, wobei einfacherweise das Getriebegehäuse von außen an dem Stützrohr befestigt ist.

Weitere Einzelheiten und Vorteile ergeben sich aus der nachfolgenden Beschreibung der auf der Zeichnung dargestellten Ausführungsbeispiele. Es zeigen:
- Fig. 1: in einer Seitenansicht, bei der Bereiche der Getriebeanordnung und längs der Längsmittelachse geschnitten wiedergegeben sind, eine hydraulisch arbeitende Gewindebolzen-Spannvorrichtung mit einer seitlich daran befestigten Getriebeanordnung zum Einstellen einer Mutter, wobei die Gewindebolzen-Spannvorrichtung auf einen durch die Mutter gesicherten Gewindebolzen aufgesetzt ist;
- Fig. 2: eine Draufsicht auf die Gewindebolzen-Spannvorrichtung der Fig. 1;
- Fig. 3a: einen Teilschnitt durch die Getriebeanordnung;
- Fig. 3b: eine Stirnansicht auf die Getriebeanordnung;
- Fig. 3c: eine Draufsicht auf die Getriebeanordnung und
- Fig. 4: eine schematische, getriebetechnische Darstellung des Getriebemechanismus zum Antreiben der Mutter.

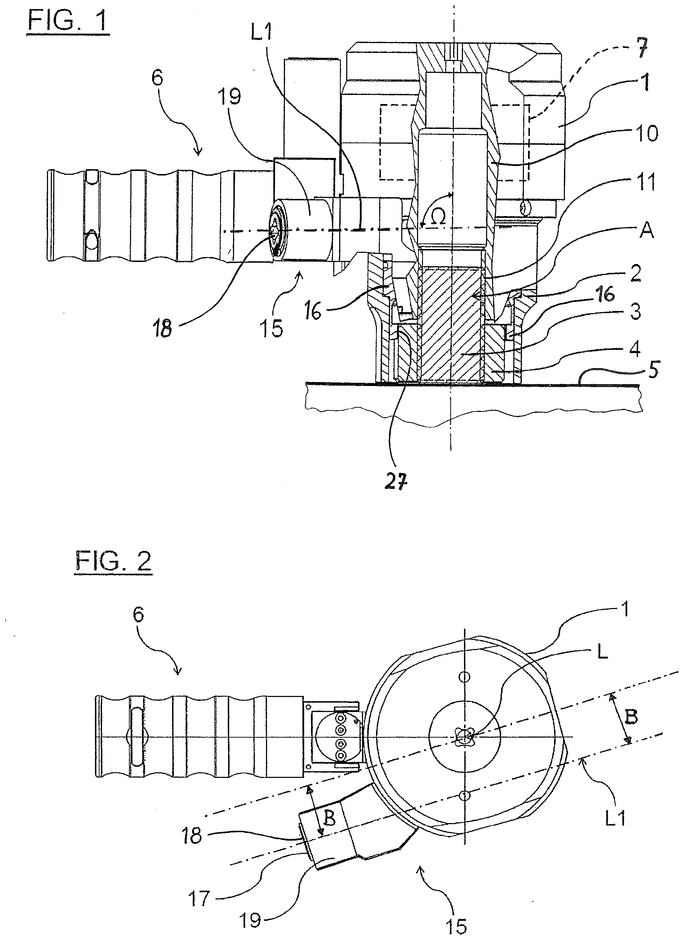

Fig. 1 zeigt eine hydraulisch angetriebene Spannvorrichtung mit einem einen Hydraulikzylinder umschließenden starren Gehäuse 1. In Längsrichtung findet das Gehäuse 1 seine starre Fortsetzung nach unten in einem Stützrohr 2, welches an seiner Unterseite offen ist und sich auf jener Unterlage 5, zumeist einem Maschinenteil, abstützt, auf der sich auch die Mutter 4 einer Schraubverbindung abstützt. Das Stützrohr 2 der Spannvorrichtung leitet die im Gehäuse 1 wirkenden Spannreaktionskräfte auf die feste Unterlage 5 ab. Das Stützrohr 2 umschließt und lässt Platz für die Mutter 4, ohne ein Drehen der im Inneren des Stützrohrs 2 angeordneten Mutter 4 zu behindern.

Die Mutter 4 ist auf einen Gewindebolzen 3 der Schraubverbindung aufgeschraubt und sichert diesen. Als vorübergehend Zug auf den Bolzen 3 ausübendes Element wird eine mit einem Innengewinde 11 versehene Wechselbuchse 10 der Bolzenspannvorrichtung auf den Endabschnitt A des über die Mutter 4 hinaus überstehenden Gewindeabschnitts des Gewindebolzens 3 aufgeschraubt. Gegen die Wechselbuchse 10 ist von unten her ein in Fig. 1 nur gestrichelt wiedergegebener Kolben 7 abgestützt. Der Kolben 7 ist in dem zylindrischen Innenraum des Hydraulikzylinders längsgeführt und diesem gegenüber abgedichtet, und begrenzt so den hydraulischen Arbeitsraum der Vorrichtung. Wird der hydraulische Arbeitsraum über eine Hydraulikversorgung 6 unter Zugkraft gesetzt, kommt es zu einem hydraulischen Druck auf die Unterseite des Kolbens 7. Dieser nimmt die am Kolben 7 abgestützte Wechselbuchse 10 mit, wodurch der Gewindebolzen 3 etwas in Längsrichtung gedehnt wird.

Über die sich seitlich an dem Gehäuse 1 befindende Hydraulikversorgung 6 sind ein oder auch mehrere in der Spannvorrichtung angeordnete Kolbenräume bzw. Arbeitsräume mit schaltbarem Hochdruck verbindbar.

Außerdem ist eine durch eine Öffnung in dem Stützrohr 2 hindurch arbeitende Getriebeanordnung 15 vorgesehen, mit deren Hilfe sich die auf dem Gewindebolzen 3 sitzende Mutter 4 drehen lässt. Dieses Drehen ist nur möglich, wenn die Spannvorrichtung arbeitet, und daher die Mutter 4 nicht durch erhebliche Reibung, insbesondere gegenüber der Unterlage 5 und dem Gewinde des Bolzens 3, belastet ist.

Das Gehäuse 1 kann einen, aber auch mehrere in Reihe hintereinander geschaltete Hydraulikzylinder 1 bilden. Jeder Hydraulikzylinder 1 umschließt dabei jeweils einen Kolbenraum und damit einen hydraulischen Arbeitsraum (in den Figuren nicht dargestellt). In jedem Kolbenraum ist, zu der Innenwandung des jeweiligen Gehäuseteils hin abgedichtet, ein Kolben in Längsrichtung L beweglich angeordnet. Beim Einschalten der Hydraulikversorgung 6 werden durch das Einspeisen von hydraulischem Druck in den bzw. die Kolbenräume der bzw. die darin angeordneten Kolben 7 angehoben. Der Kolben 7 bzw., im Falle eines mehrteiligen Kolbens, dessen oberster Kolben ist derart mit der Wechselbuchse 10 in Längsrichtung L bewegungsgekoppelt, dass beim Anheben des Kolbens es zu einer identischen Bewegung und Mitnahme der Wechselbuchse 10 kommt, und damit zu einem torsionsfreien Strecken des Gewindebolzens 3.

Die mit dem Endabschnitt A des Außengewindes des Gewindebolzens 3 verschraubbare Wechselbuchse 10 ist austauschbar gestaltet, sie lässt sich also bei Bedarf gegen eine Wechselbuchse 10 anderer Größe bzw. Geometrie austauschen, wohingegen der ein- oder mehrteilige Kolben 7 nicht gegen einen anderen Kolben ausgetauscht werden muss.

Zum Spannen des Gewindebolzens 3 wird zunächst die Wechselbuchse 10 mit ihrem Innengewinde 11 auf den Gewindeendabschnitt A des Gewindebolzens aufgeschraubt. Durch anschließendes Einspeisen von hydraulischem Druck hebt der im Zylinder 1 geführte und von unten gegen die Wechselbuchse 10 abgestützte Kolben 7 unter Mitnahme der Wechselbuchse 10 an, wodurch es zur Längsdehnung des Gewindebolzens 3 kommt. Damit verbunden ist ein Reibungsverlust an der Unterseite der Mutter 4, so dass diese sich jetzt mittels der Getriebeanordnung 15 auf dem Gewinde des Bolzens 3 drehen, z. B. nachziehen lässt.

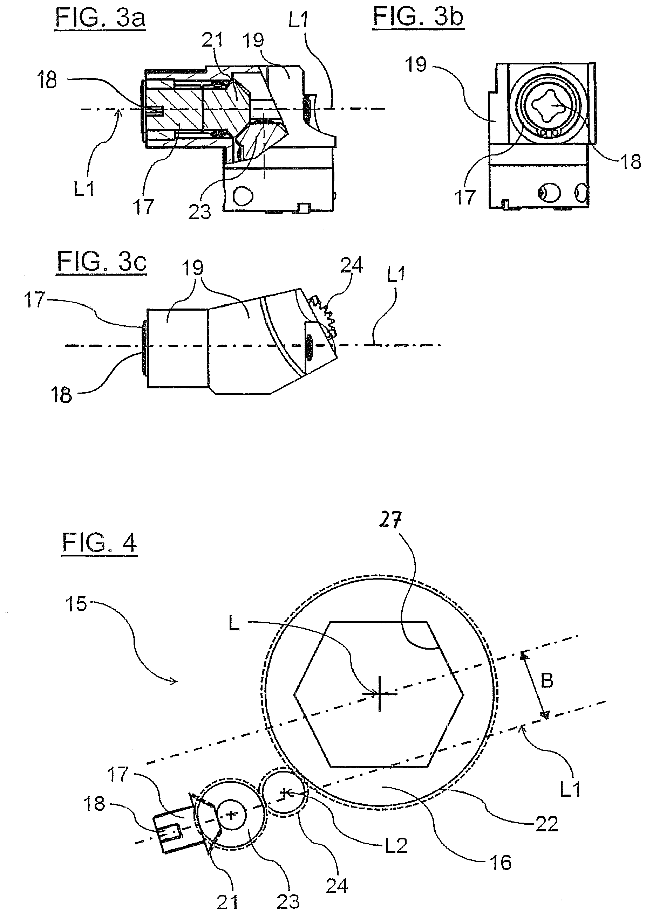

Die Fig. 2 lässt erkennen, dass die Getriebeanordnung 15 seitlich derart an dem als Hydraulikzylinder dienenden Gehäuse 1 und/oder an dem Stützrohr 2 befestigt ist, dass die Drehachse L1 einer Antriebswelle 17, die Bestandteil der Getriebeanordnung 15 ist, nicht parallel zu der Längsmittelachse L des Kolbens verläuft. Wie Fig. 2 und Fig. 4 erkennen lassen, schneidet die Drehachse L1 die Längsmittelachse L nicht. Stattdessen verläuft die Drehachse L1 tangential und in einem Abstand B zur Längsmittelachse L, d. h. zwischen den Achsen L1 und L existiert ein Mindestabstand B. B ist größer als Null, denn die Achsen L1 und L schneiden sich nicht.

Die Fign. 3a bis 3c zeigen drei verschiedene Ansichten der Getriebeanordnung 15. Zum Einstellen der Mutter 4 durch die Öffnung 2A in dem Stützrohr 2 weist die Getriebeanordnung 15 insgesamt vier teilweise ineinandergreifende, miteinander in Wirkverbindung stehende Verzahnungselemente 21, 22, 23, 24 auf, von denen in Fig. 3a das erste 21 und das dritte 23 sowie in Fig. 3c das vierte Verzahnungselement 24 erkennbar ist. Die Verzahnungselemente 21, 23 sind vollständig innerhalb eines Getriebegehäuses 19 der Getriebeanordnung angeordnet, eines 24 nur zum Teil und eines 22 komplett außerhalb.

Das erste Verzahnungselement 21 ist an dem in das Innere des Getriebegehäuses 19 weisenden Ende der Antriebswelle 17 angeordnet und als Antriebskegelrad 21 ausgebildet. Das andere Ende der Antriebswelle 17 weist aus dem Getriebegehäuse 19 heraus, dort ist die Antriebswelle 17 mit einer als Innenmehrkant ausgebildeten Eingriffsstruktur 18 versehen. An die Eingriffsstruktur 18 lässt sich ein entsprechendes externes Werkzeug, z. B. ein Handwerkzeug, ansetzen, um so die Antriebswelle 17 um ihre Drehachse L1 zu drehen. Die Antriebswelle 17 ist in dem Getriebegehäuse 19 gelagert.

Das als Antriebskegelrad ausgebildete erste Verzahnungselement 21 steht in unmittelbaren Zahneingriff mit einem als weiteres Kegelrad ausgebildeten dritten Verzahnungselement 23, dessen Drehachse derart um 90° zu der Drehachse L1 gekippt ist, dass sie parallel zu der Längsmittelachse L des Kolbens angeordnet ist. Durch die Paarung der beiden Kegelradzahnräder 21 und 23 wird ein Winkel Ω von in diesem Fall 90° erzielt. Das weitere Kegelrad 23 ist derart verzahnt, dass es sich gleichzeitig auch zum Eingriff mit einem parallel rotierenden Zylinderzahnrad eignet.

In Fig. 3c und schematisch in Fig. 4 ist ein derartiges Zylinderzahnrad als viertes Verzahnungselement 24 erkennbar. Das vierte Verzahnungselement 24 ragt auf der der Eingriffsstruktur 18 abgewandten Seite des Getriebegehäuses 19 teilweise aus diesem heraus. Dieser herausragende Teil des als Zylinderzahnrad ausgebildeten, vierten Verzahnungselements 24 ist so dimensioniert, dass er durch die Öffnung 2A in dem Stützrohr 2 hindurch mit dem zweiten Verzahnungselement 22 (Fig. 4) in direktem Zahneingriff steht. Das zweite Verzahnungselement 22 ist am Umfang eines Mitnehmerelements 16 (Fig. 1, Fig. 4) als zylindrische Verzahnung ausgebildet. Das Mitnehmerelement 16 befindet sich vollständig innerhalb des Stützrohrs 2 und ist formschlüssig um die Mutter 4 herum angeordnet, so dass eine Drehung des Mitnehmerelements 16 zu einer identischen Drehung der Mutter 4 führt. Dazu ist das Mitnehmerelement 16 ringförmig und innen mit einem Innensechskant 27 versehen, der zu dem Außensechskant der Mutter 3 korrespondiert.

Fig. 4 zeigt schematisch die gesamte Wirkverbindung des durch die Getriebeanordnung 15 gebildeten Antriebsstranges zur Einstellung der Mutter 4. Um die Mutter 4 anzuziehen, wird über das mit der Eingriffsstruktur 18 korrespondierende und in die Eingriffsstruktur 18 eingeführte Werkzeug, z. B. eine Ratsche mit einem Außenvierkant, die Antriebswelle 17 in eine Rechtsdrehung versetzt. Mit der Antriebswelle 17 dreht sich das an dieser angeordneten Antriebskegelrad 21 identisch mit. In direktem Zahneingriff mit dem Antriebskegelrad 21 steht das weitere Kegelrad 23, welches daher um eine zu der Drehachse L1 um 90° gekippte Drehachse in Rotation versetzt wird, wobei diese Drehachse bereits parallel zur Drehachse der Mutter 4 und Längsmittelachse L des Kolbens ausgerichtet ist. Das weitere Kegelrad 23 versetzt über das vierte Verzahnungselement 24 die zweite Verzahnungselement 22 des Mitnehmerelements 16 in eine Rechtsdrehung, und somit über den Innensechskant 27 auch die Mutter 4.

### Bezugszeichenliste

- 1: Gehäuse/ Hydraulikzylinder
- 2: Stützrohr
- 3: Gewindebolzen
- 4: Mutter
- 5: Unterlage
- 6: Hydraulikversorgung
- 7: Kolben
- 10: Wechselbuchse
- 11: Innengewinde
- 15: Getriebeanordnung
- 16: Mitnehmerelement/ Innenmehrkant
- 17: Antriebswelle
- 18: Eingriffsstruktur
- 19: Getriebegehäuse
- 21: erstes Verzahnungselement
- 22: zweites Verzahnungselement
- 23: drittes Verzahnungselement
- 24: viertes Verzahnungselement
- 27: Innensechskant

- A: Gewindeendabschnitt/ Endabschnitt
- B: Abstand
- L: Längsmittelachse
- L1: Drehachse
- L2: Drehachse
- Ω: Winkel

## Patentansprüche

1. Spannvorrichtung zum Dehnen eines Gewindebolzens durch Zug an dessen Gewindeendabschnitt (A), mit einem den Gewindeendabschnitt (A) und eine auf den Gewindeendabschnitt (A) aufgeschraubte Mutter (4) umgebenden Stützrohr (2), einem in Verlängerung des Stützrohrs (2) angeordneten Zylinder mit mindestens einem darin in Längsrichtung bewegbaren, mit einer Hydraulikversorgung verbindbaren Kolben (7), einer mit dem Gewindeendabschnitt (A) verschraubbaren, durch den Kolben (7) axial mitnehmbar ausgebildeten Wechselbuchse (10), und einer Getriebeanordnung (15) zum Nachstellen der Mutter (4), wobei Bestandteile der Getriebeanordnung (15) ein außen an der Mutter (4) angreifendes Mitnehmerelement (16) und eine Antriebswelle (17) sind, deren Drehachse (L1) in einem Winkel von mehr als 0° und weniger als 180°, vorzugsweise in einem Winkel von 90°, zur Längsmittelachse (L) des Kolbens (7) angeordnet ist, wobei die Antriebswelle (17) mit einer Eingriffsstruktur (18) für ein Antriebswerkzeug versehen ist, **dadurch gekennzeichnet, dass** die Drehachse (L1) der Antriebswelle (17) tangential und in einem Abstand (B) zur Längsmittelachse (L) des Kolbens (7) verläuft.

2. Spannvorrichtung nach Anspruch 1, **dadurch gekennzeichnet, dass** die Antriebswelle (17) an ihrem der Eingriffsstruktur (18) abgewandten Ende als ein erstes Verzahnungselement (21) ausgebildet ist, und dass das Mitnehmerelement (16) an seinem Umfang als ein zweites Verzahnungselement (22) ausgebildet ist, wobei das erste und das zweite Verzahnungselement (21, 22) in Wirkverbindung zueinander stehen.

3. Spannvorrichtung nach Anspruch 2, **dadurch gekennzeichnet, dass** das erste Verzahnungselement (21) als Antriebskegelrad ausgebildet ist.

4. Spannvorrichtung nach Anspruch 2 oder 3, **dadurch gekennzeichnet, dass** weiterer Bestandteil der Getriebeanordnung (15) ein zwischen dem ersten Verzahnungselement (21) und dem zweiten Verzahnungselement (22) angeordnetes drittes, mit diesen beiden in Wirkverbindung stehendes Verzahnungselement (23) zur Übertragung einer Drehung der Antriebswelle (17) auf das Mitnehmerelement (16) ist.

5. Spannvorrichtung nach Anspruch 4 i. V. m. Anspruch 3, **dadurch gekennzeichnet, dass** das dritte Verzahnungselement (23) als ein mit dem Antriebskegelrad (21) in Eingriff stehendes weiteres Kegelrad ausgebildet ist.

6. Spannvorrichtung nach Anspruch 5, **dadurch gekennzeichnet, dass** zwischen dem weiteren Kegelrad (23) und dem zweiten Verzahnungselement (22) ein viertes mit diesen beiden in Eingriff stehendes und als weiteres Zylinderrad ausgebildetes Verzahnungselement (24) zur Übertragung der Drehung der Antriebswelle (17) auf das Mitnehmerelement (16) angeordnet ist.

7. Spannvorrichtung nach einem der vorherigen Ansprüche, **dadurch gekennzeichnet, dass** das Mitnehmerelement (16) mit einem Innenmehrkant (27) zum Aufstülpen auf die Mutter (4) versehen ist.

8. Spannvorrichtung nach einem der vorherigen Ansprüche, **dadurch gekennzeichnet, dass** die Getriebeanordnung (15) um die Längsmittelachse (L) des Kolbens (7) herum verschwenkbar ausgebildet ist.

9. Spannvorrichtung nach einem der Ansprüche 6 oder 7, **dadurch gekennzeichnet, dass** die Getriebeanordnung (15) um die Drehachse (L2) des vierten Verzahnungselements (24) herum verschwenkbar ausgebildet ist.

10. Spannvorrichtung nach einem der vorherigen Ansprüche, **dadurch gekennzeichnet, dass** weiterer Bestandteil der Getriebeanordnung (15) ein die Antriebswelle (17) aufnehmendes, ein- oder mehrteilig ausgebildetes Getriebegehäuse (19) ist, und dass das Getriebegehäuse (19) von außen gegen das Stützrohr (2) abgestützt ist.

## Claims

1. Clamping device for stretching a threaded bolt by way of traction on the threaded end portion (A) of said threaded bolt, having
a tubular support (2) that surrounds the threaded end portion (A) and a nut (4) that is screwed onto the threaded end portion (A);
a cylinder that is disposed in the extension of the tubular support (2) and has at least one piston (7) that is displaceable in the longitudinal direction in said cylinder and is connectable to a hydraulic supply;
a replaceable bush (10) that is screw-fittable to the threaded end portion (A) and is configured so as to be axially entrainable by the piston (7); and
a gearbox assembly (15) for readjusting the nut (4) ;
wherein component parts of the gearbox assembly (15) are an entrainment element (16) that engages externally on the nut (4), and a drive shaft (17), the rotation axis (L1) of the latter in relation to the longitudinal central axis (L) of the piston (7) being disposed at an angle of more than 0° and of less than 180°, preferably at an angle of 90°, wherein the drive shaft (17) is provided with an engagement structure (18) for a driving tool, **characterized in that**
the rotation axis (L1) of the drive shaft (17) runs tangentially to the longitudinal central axis (L) of the piston (7) and so as to be at a spacing (B) from said axis (L).

2. Clamping device according to Claim 1, **characterized in that** the drive shaft (17) at that end thereof that faces away from the engagement structure (18) is configured as a first meshing element (21), and **in that** the entrainment element (16) on the circumference thereof is configured as a second meshing element (22), wherein the first and the second meshing element (21, 22) are operatively interconnected.

3. Clamping device according to Claim 2, **characterized in that** the first meshing element (21) is configured as a drive bevel gear.

4. Clamping device according to either of Claims 2 and 3, **characterized in that** a further component part of the gearbox assembly (15) is a third meshing element (23) for transmitting a rotation of the drive shaft (17) to the entrainment element (16), said third meshing element (23) being disposed between the first meshing element (21) and the second meshing element (22) and being operatively connected to both said first and said second meshing element (21, 22).

5. Clamping device according to Claim 4 in conjunction with Claim 3, **characterized in that** the third meshing element (23) is configured as a further bevel gear that engages with the drive bevel gear (21).

6. Clamping device according to Claim 5, **characterized in that** a fourth meshing element (24) for transmitting the rotation of the drive shaft (17) to the entrainment element (16) is disposed between the further bevel gear (23) and the second meshing element (22), said fourth meshing element (24) engaging with both said further bevel gear (23) and said second meshing element (22) and being configured as a further cylindrical gear.

7. Clamping device according to one of the preceding claims, **characterized in that** the entrainment element (16) is provided with an internal polygon (27) for push-fitting onto the nut (4).

8. Clamping device according to one of the preceding claims, **characterized in that** the gearbox assembly (15) is configured so as to be pivotable about the longitudinal central axis (L) of the piston (7).

9. Clamping device according to either of Claims 6 and 7, **characterized in that** the gearbox assembly (15) is configured so as to be pivotable about the rotation axis (L2) of the fourth meshing element (24).

10. Clamping device according to one of the preceding claims, **characterized in that** a further component part of the gearbox assembly (15) is a gearbox housing (19) that receives the drive shaft (17) and is configured in one or a plurality of parts, and **in that** the gearbox housing (19) is externally supported in relation to the tubular support (2).

## Revendications

1. Dispositif de serrage pour l'étirement d'un boulon fileté par traction au niveau de sa section d'extrémité filetée (A), avec un tube de maintien (2) entourant la section d'extrémité filetée (A) et un écrou (4) vissé sur la section d'extrémité filetée (A), avec un cylindre disposé dans le prolongement du tube de maintien (2) avec au moins un piston (7) mobile à l'intérieur dans la direction longitudinale et pouvant être relié à une alimentation hydraulique, avec une douille interchangeable (10) vissable avec la section d'extrémité filetée (A) et réalisée de façon à pouvoir être prise en même temps dans le plan axial par le piston (7) et avec un agencement d'engrenage (15) permettant de régler dans un second temps l'écrou (4), les composants de l'agencement d'engrenage (15) étant un élément d'entraînement conjoint (16) s'engrenant à l'extérieur au niveau de l'écrou (4) et un arbre d'entraînement (17) dont l'axe de rotation (L1) est disposé selon un angle de plus de 0° et inférieur à 180°, de préférence selon un angle de 90°, par rapport à l'axe central longitudinal (L) du piston (7), l'arbre d'entraînement (17) étant pourvu d'une structure de mise en prise (18) pour un outil d'entraînement, **caractérisé en ce que** l'axe de rotation (L1) de l'arbre d'entraînement (17) s'étend tangentiellement et à une certaine distance (B) de l'axe central longitudinal (L) du piston (7).

2. Dispositif de serrage selon la revendication 1, **caractérisé en ce que** l'arbre d'entraînement (17) est réalisé au niveau de son extrémité opposée à la structure de mise en prise (18) sous la forme d'un premier élément d'endentement (21) et que l'élément d'entraînement conjoint (16) est réalisé au niveau de sa périphérie sous la forme d'un deuxième élément d'endentement (22), le premier et le deuxième élément d'endentement (21, 22) étant en liaison active l'un avec l'autre.

3. Dispositif de serrage selon la revendication 2, **caractérisé en ce que** le premier élément d'endentement (21) est réalisé sous la forme d'une roue conique d'entraînement.

4. Dispositif de serrage selon la revendication 2 ou 3, **caractérisé en ce qu'**un composant supplémentaire de l'agencement d'engrenage (15) est un troisième élément d'endentement (23) disposé entre le premier élément d'endentement (21) et le deuxième élément d'endentement (22) et relié de façon active à eux deux pour la transmission d'une rotation de l'arbre d'entraînement (17) à l'élément d'entraînement conjoint (16).

5. Dispositif de serrage selon la revendication 4 associée à la revendication 3, **caractérisé en ce que** le troisième élément d'endentement (23) est réalisé sous la forme d'une roue conique également en prise avec la roue conique d'entraînement (21).

6. Dispositif de serrage selon la revendication 5, **caractérisé en ce qu'**un quatrième élément d'endentement (24) est disposé entre la roue conique (23) supplémentaire et le deuxième élément d'endentement (22), ledit élément étant en prise avec eux deux et étant réalisé sous la forme d'une roue cylindrique supplémentaire pour la transmission de la rotation de l'arbre d'entraînement (17) à l'élément d'entraînement conjoint (16).

7. Dispositif de serrage selon l'une quelconque des revendications précédentes, **caractérisé en ce que** l'élément d'entraînement conjoint (16) est pourvu d'un polygone intérieur (27) à retourner sur l'écrou (4).

8. Dispositif de serrage selon l'une quelconque des revendications précédentes, **caractérisé en ce que** l'agencement d'engrenage (15) est réalisé de façon à pouvoir pivoter autour de l'axe central longitudinal (L) du piston (7).

9. Dispositif de serrage selon l'une quelconque des revendications 6 ou 7, **caractérisé en ce que** l'agencement d'engrenage (15) est réalisé de façon à pouvoir pivoter autour de l'axe de rotation (L2) du quatrième élément d'endentement (24).

10. Dispositif de serrage selon l'une quelconque des revendications précédentes, **caractérisé en ce qu'**un composant supplémentaire de l'agencement d'engrenage (15) est un carter de boîte de vitesses (19) logeant l'arbre d'entraînement (17) et réalisé en une ou plusieurs parties et que le carter de boîte de vitesses (19) est maintenu de l'extérieur contre le tube de maintien (2).
